# EUROPEAN PATENT SPECIFICATION

(11) **EP 3 165 616 B1**
(45) Date of publication and mention of the grant of the patent: **21.03.2018**
(21) Application number: 14896593.2
(22) Date of filing: 03.07.2014
(51) Int. Cl.: C22B 3/26, C22B 19/30, C22B 7/02

(54) **METHOD FOR PROCESSING ZINC OXYCHLORIDE-CONTAINING SECONDARY MATERIAL**
VERFAHREN ZUR VERARBEITUNG EINES ZINKOXYCHLORIDHALTIGEN SEKUNDÄRMATERIALS
PROCEDE DE TRAITEMENT DE MATERIAU SECONDAIRE CONTENANT DE L'OXYCHLORURE DE ZINC

(43) Date of publication of application: 10.05.2017
(73) Proprietor: Yunnan Xiangyunfeilong Resources Recycling Technology Co., Ltd, Yunnan 672100 (CN)
(72) Inventor: SHU, Yuzhang, Yunnan 672100 (CN); ZHANG, Qi, Yunnan 672100 (CN); YANG, Guifen, Yunnan 672100 (CN); SUN, Baohua, Yunnan 672100 (CN); WEI, Linkui, Yunnan 672100 (CN)
(74) Representative: Sun, Yiming
(86) International application number: PCT/CN2014/081557
(87) International publication number: WO 2016/000231

(56) References cited:
- CN-A- 1 858 272
- CN-A- 102 808 087
- CN-A- 102 808 087
- CN-A- 103 060 561
- JP-A- 2008 266 774
- US-A- 4 610 722
- US-A1- 2013 220 824

## Description

### FIELD OF THE TECHNOLOGY

The invention belongs to the field of comprehensive recovery of a zinc-containing secondary resource, and in particular relates to a treatment method of a chlorine-containing zinc oxide secondary material.

### BACKGROUND

At present, about 14,000,000 t/a of zinc ingot are consumed in the world, wherein 50% of the zinc ingot are used for surface protection of steel; in recovering of galvanized steel, zinc volatilizes at high temperature and enters into steelmaking dust, and the dust is called as electric arc furnace dust (EAFD). In addition, zinc is also accompanied in various metal mineral resources, and the zinc invades into the smelting dust in a process of smelting those metals at high temperature; in some zinc-containing waste, lead and zinc volatilize into the dust through a high-temperature reducing volatilization way. The dust is a main source of secondary zinc resource; zinc exists in the zinc-containing materials in the form of oxide in common; meanwhile, the zinc-containing materials are different in chlorine content which exceeds the maximum amount allowed by zinc hydrometallurgy by tens to hundreds of times at most, and the zinc-containing materials contain lead, calcium, magnesium, iron, sodium, potassium, silicon dioxide, etc. When being treated by a current zinc hydrometallurgy technology, chlorine enters into solution, so that electrolysis process of the zinc cannot continue. Mineral zinc raw material is growing increasingly tense and is to run out around the world, while secondary zinc resource becomes more and accumulation of the secondary zinc resource causes increasing pressure on environment, so that people are urged to conduct a lot of researches on utilization of the secondary resource.

High chlorine content is a key factor that the current zinc smelting technology is unavailable to treat the secondary resource; to make the raw material adapt to technological requirements of zinc hydrometallurgy, current researches mainly focus on removal of chlorine in the raw materials. According to an existing treatment idea, chlorine of the materials is removed, and the current zinc smelting technology is employed after reducing chlorine content.

Chlorine is removed from the chlorine-containing zinc oxide respectively through pyrogenic dechloridation and wet dechloridation processes. The pyrogenic dechloridation, on the basis of a property of metal chloride which is easy to volatilize due to relatively high vapor pressure at high temperature, volatilizes and removes chlorine in the form of the metal chloride at high temperature. Generally, such dechlorinating equipment include multi-hearth furnace and waelz kiln. Some people also make studies on microwave dechloridation, which heats materials to 700-1100 DEG C to volatilize the chlorine. The pyrogenic dechloridation has shortcomings such as high energy consumption, low metal recovery rate, a gas-phase pollution source and pressure on environment due to generation of dust higher in chlorine content, but the pyrogenic dechloridation is also widely adopted by various enterprises at present; after removing the chlorine, zinc oxide is applied to the existing zinc smelting process.

The wet dechloridation, on the basis of a property of being soluble in water of chloride, converts chlorine in solution. Generally, sodium carbonate (or ammonium carbonate) is used for treating materials, lead chloride and zinc chloride are converted into carbonate insoluble in water, and the chlorine enters into the solution in the form of sodium chloride. The wet dechloridation has the shortcomings of incomplete dechloridation, high reagent consumption, high cost and high dechloridation water consumption, and after removing chlorine, the liquid is mixing thin solution of sodium (potassium) chloride, sodium carbonate and sodium (potassium) sulfate. The dechloridation solution, which is non-recyclable and is inconvenient to recover chloride, is generally discharged. Therefore serious chlorine-containing wastewater discharge accompanies with the wet dechloridation.

Although the various disadvantages, the process of removing chlorine from the raw materials is a choice to treat chlorine-containing zinc oxide secondary resource at present. The chlorine-containing zinc oxide, after removing the chlorine, can be applied to the current zinc smelting process, and a certain amount of chlorine which is still kept in the raw materials is constantly accumulated in a leaching-electrolyte circulating process in zinc hydrometallurgy. Therefore, the chlorine shall be removed from circulating zinc sulfate solution. The chlorine in the zinc sulfate solution is removed on the basis that some oxides are low in solubility in the zinc sulfate solution and the chlorine is removed from the solution through generated chloride precipitate; generally, cuprous ion serves as a precipitator for precipitating chlorine ions; by precipitating the chlorine in the form of cuprous chloride, chlorine in the zinc sulfate solution is reduced so that electrolysis can be implemented normally. Sometimes, ion exchange, organic solvent chlorine extraction or other methods are available to transfer chlorine in the zinc sulfate solution to other solutions, so as to discharge the chlorine in the form of wastewater. Because of existence of the chlorine, the zinc hydrometallurgy process is complex and is increased in consumption of expensive copper; meanwhile, discharge of chlorine-containing wastewater is increased. CN102808087 discloses a hydrometallurgical process for comprehensive recovery of chlorine-containing zinc oxide secondary sources. Therefore, the problem of high chlorine content in the secondary zinc oxide is still an issue in the zinc recycling field. Because such issue cannot be solved thoroughly and secondary zinc oxide resource cannot be effectively utilized for long time, so that utilization rate of zinc secondary resource is much less than that of other nonferrous metals.

### THE CONTENT OF THE INVENTION

### TECHNICAL PROBLEMS

Whereas, in order to solve above said issues, the invention aims at providing an environment- friendly and energy-saving technology for chlorine-containing zinc oxide secondary resource. The inventor, on the basis of a lot of further studies and creative work, completes the invention.

### SOLUTION TO THE PROBLEMS

### TECHNICAL SOLUTION

A treatment method of chlorine-containing zinc oxide secondary material is characterized by the following steps:
(1) Leaching the chlorine-containing zinc oxide secondary material I through an acid solution to obtain leaching liquor and leaching residue;
(2) Selectively extracting zinc from leaching liquor obtained from the Step (1) through P₂₀₄₋kerosene solvent to obtain a zinc-containing organic phase as well as chlorine and acid containing raffinate;
(3) Implementing stripping-electrolysis zinc recovery to the zinc-containing organic phase obtained from the Step (2), and returning the organic phase after the stripping to the Step (2) to extract zinc;
(4) Taking the raffinate obtained from the Step (2) as the acid solution of the Step (1), returning to Step (1) and repeating steps (1)-(4);
(5) Taking out the raffinate obtained from the Step (4), when the chlorine ion of chlorine-containing aqueous phase in the step (2) achieves 50-80g/L after circulating repeating steps (1)-(4), wherein the number of taking out the raffinate shall guarantee the chlorine content of the taken out raffinate is identical to that of raw material added in the Step (1) so as to keep chlorine ion adding and taking out balance; mixing the taken out raffinate with additional chlorine-containing zinc oxide secondary material II at liquid-solid ratio of 1-3: 1; carrying out liquid-solid separation; leaching the separated deposit through acid raffinate of the Step (1);
(6) After finishing the Step (5) until separated solution contains 80-120g/L of chlorine ion and 160-240g/L of total salt content, removing impurities of chlorine-containing aqueous phase to obtain a KCl and NaCl mixing solution;
(7) Evaporating and concentrating the KCl and NaCl mixing solution obtained from the Step (6) to crystallize out KCl and NaCl products.

Preferably, in the Step (1), the leaching conditions are as follows: liquid-solid ratio is controlled according to leaching liquor that contains 25-28g/L of zinc. Depending on different zinc contents of material, the liquid-solid ratio is controlled at 20-40: 1; leaching is implemented in a mechanical stirring tank; and leaching end pH value is at 4.5-5.0.

Preferably, sulfuric acid serves as acid solution for primary leaching in the Step (1); the sulfuric acid shall be supplied if the acid from the raffinate of the Step (4) for leaching in the Step (1) is insufficient.

Preferably, in the Step (2), the P₂₀₄₋kerosene solvent is prepared by making volume percentage of an organic solvent P₂₀₄ at 20-40% through 260# solvent kerosene.

Preferably, the stripping-electrolysis zinc recovery in the Step (3) is carried out by implementing stripping on zinc-containing organic phase through zinc electrolysis waste solution, wherein the stripping solution contains 100-120g/L of Zn and 60-100g/L of H₂SO₄, and electrolyzing zinc after deoiling.

Preferably, mixing in the Step (5) is carried out in a mechanical stirring tank or in a form of dump leaching; ore pulp shall be filtered to realize liquid-solid separation when the mixing is carried in the mechanical stirring tank.

Preferably, impurity removal in the Step (6) comprises the following steps:
1) neutralizing and removing heavy metal: adding lime and controlling pH value at 7.0-7.5;
2) neutralizing and removing Mg: adding lime and controlling pH value at 10;
3) removing calcium: adding Na₂CO₃.

### THE ADVANTAGE OF THE INVENTION

### THE ADVANTAGES

The invention has the advantages as follows:
1. The invention avoids chlorine removal process from Step (1) to Step (7), thus omitting a raw material chlorine removal process, simplifying process, eliminating gaseous phase and aqueous phase pollution sources in the raw material chlorine removal process, saving energy consumption and reagent consumption in the chlorine removal process and greatly reducing production cost.
2. According to the invention, zinc is extracted and recovered from organic solvent in the Step (2), impurities are removed in the Step (6) and chloride is recovered in the Step (7), thus achieving a purpose of simultaneously implementing zinc recovery, chloride recovery and impurity removal.
3. According to the invention, chlorine in the chlorine-containing zinc oxide is converted into the solution through step (1), (2), (3), (4) and (5) and is enriched as a chloride solution high in concentration, so as to facilitate recovery of sodium chloride and potassium chloride from the solution.
4. According to the invention, chloride is recovered in the Step (7), so as to recover the chlorine in the raw material as a product, which not only guarantees a certain economic value but also thoroughly eliminates secondary pollution of the current dechloridation process.
5. The invention is free from process wastewater discharge, thus the company can realize the goal of zero emission of waste water.
6. According to the invention, zinc oxide secondary materials differing in chlorine content which chlorine content is 1-20% can be directly processed raw material relatively low in chlorine content is directly leached as operations in the Step (1), and raw material relatively high in chlorine content is processed by raffinate as operations in the Step (5) and is leached as the Step (1).

### BRIEF DESCRIPTIONOFTHEDRAWINGS

In order to clearly illustrate the technical solution of the embodiments of the invention or the existing technology, the drawings of the embodiments will be briefly described in the following; it is obvious that the described drawings are only related to embodiments of the invention; those skilled in the field can obtain other drawings depending on those drawings, without any inventive work.

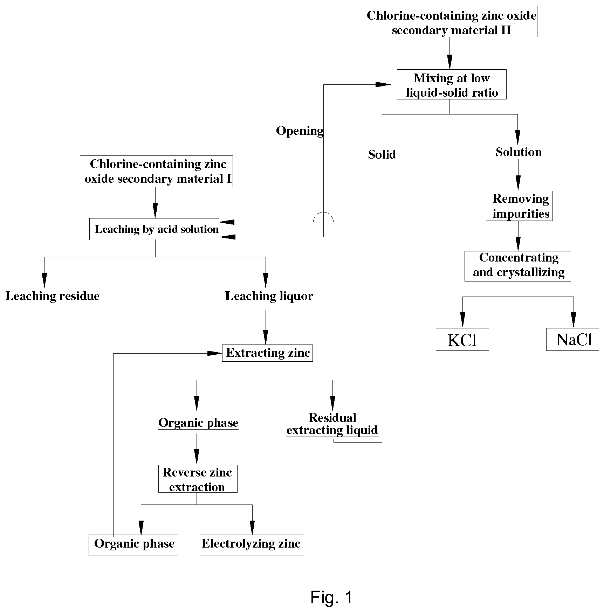

Fig. 1 is process flowchart of the invention.

### INVENTIONEMBODIMENTS

### THE EMBODIMENTS OF THE INVETION

The technical solutions of the embodiment will be described in a clearly and fully understandable way in connection with drawings related to the embodiments of the invention. It is obvious that the described embodiments are just a part but not all of the embodiments of the invention. Based on the described embodiments therein, those skilled in the art can obtain other embodiment(s), without any inventive work, which should be within the scope of the invention.

According to the process flowchart as shown in Fig. 1, a treatment method of a chlorine-containing zinc oxide secondary material comprises the following steps:
(1) Leaching the chlorine-containing zinc oxide secondary material I through an acid solution to obtain leaching liquor and leaching residue;
(2) Selectively extracting zinc from leaching liquor obtained from the Step (1) through Pm-kerosene solvent to obtain a zinc-containing organic phase as well as a chlorine and acid containing raffinate;
(3) Implementing stripping-electrolysis zinc recovery to the zinc-containing organic phase obtained from the Step (2); returning the lean organic phase after the stripping to the Step (2) to extract zinc;
(4) Taking the raffinate obtained from the Step (2) as the acid solution of the Step (1), returning to Step (1) and repeating (1)-(4);
(5) Circulating the chlorine ion of chlorine-containing aqueous phase in the Step (2) for several times until chlorine ion achieves 50-80g/L; taking out one part of the raffinate obtained from the Step (4), and mixing additional chlorine-containing zinc oxide secondary material at low liquid-solid ratio, separating precipitate, and adding the chlorine-containing zinc oxide secondary material of the Step (1), wherein the number of taking out the raffinate shall guarantee the chlorine content of the taken out raffinate is identical to that of raw material added in the Step (1) so as to keep chlorine ion adding and taking out balance;
(6) When chlorine-containing aqueous phase of the Step (5) contains 80-120g/L of chlorine ion and 160-240g/L of total salt content, removing impurities of chlorine-containing aqueous phase to obtain a KCl and NaCl mixing solution
(7) Evaporating and concentrating the KCl and NaCl mixing solution obtained from the Step (6) to crystallize out KCl and NaCl products.

Therefore, according to the process flow, actually, an acid wet treatment process of chlorine-containing zinc oxide (secondary material) is provided according to the invention. Further description will be made on the process flow below:
According to the invention, instead of implementing dechloridation to the chlorine-containing zinc oxide (secondary material) in advance, the zinc oxide is directly leached through acid solution, so that such soluble materials as zinc, chlorine, potassium, sodium and magnesium in the zinc oxide are leached in the solution; the zinc is selectively extracted through P₂₀₄₋kerosene solvent so as to separate the zinc from Cr, K⁺, Na⁺, Mg²⁺ and the like. By implementing stripping-electrolysis zinc recovery from zinc-containing organic phase, the raffinate is returned once again to leach out chlorine-containing zinc oxide. Repeating in such way, Cl⁻, K⁺, Na⁺, Mg²⁺ and other ions in the solution are circulated and enriched, thus forming a complex chlorine salt-sulfate mixing system mainly containing Cl⁻ ion and simultaneously including K⁺, Na⁺, Mg²⁺ and Zn²⁺ as well as little sulfuric acid.

After Cl⁻, K⁺,Na⁺ and Mg²⁺ in the solution achieve a certain concentration, partial zinc raffinate is taken out to recover chloride, thus realizing input and output balance in Cl⁻, K⁺, , Na⁺, Mg²⁺ and other ions.

The taken out zinc raffinate contains free acid identical to extracted zinc ion in mole and not-extracted zinc; the taken out raffinate is mixed with excessive chlorine-containing zinc oxide raw material in the low liquid-solid ratio; acid of the solution is neutralized, zinc and sulfate radical are reduced, and chlorine ion concentration is further improved. The solution is neutralized by lime to remove Mg²⁺ and trace amount of heavy metal ion; the solution, after being processed, is a KCl and NaCl mixing high-concentration solution; the solution is concentrated and crystallized to generate potassium chloride and sodium chloride products.

Furthermore, principles and characteristics of the process flow according to the invention are described below, including preferred process conditions of steps (1)-(7). Equivalent or equal process conditions made by those skilled in the art through the principles and characteristics below shall be included within content scope and protection scope of the present invention.

The invention has the following characteristics:
1. Instead of pyrogenic or wet dechloridation in advance, acid leaching is directly implemented on the high-chlorine zinc oxide raw material.

Cl⁻, Zn²⁺, Mg²⁺, K⁺ and Na⁺ in the raw material enters into the leaching liquor; acid for leaching comes from circulating residual zinc raffinate, and sulfuric acid is supplied for insufficient part. Pb and Ca in the raw material enter into leaching residue in the form of sulfate together with SiO₂; the sulfate in the solution will not be accumulated or enriched; the leaching residue serves as source of recovering lead.

Preferably, leaching conditions are as follows: liquid-solid ratio is controlled according to leaching liquor that contains 25-28g/L of zinc; leaching is implemented in a mechanical stirring tank; and leaching end pH value is at 4.5-5.0.

To improve zinc leaching rate, zinc hydrometallurgy is available, which generally adopts multi-stage countercurrent leaching.

Leaching reactions:

MO+H₂SO₄→MSO₄+H₂O

MO+2HCl→MCl₂+H₂O

PbO+H₂SO₄→PbSO₄↓+H₂O

PbCl₂+H₂SO₄→PbSO₄↓+2HCl

CaO+H₂SO₄+H₂O→CaSO₄•2H₂O↓

M is Zn, Mg, etc., and KCl, NaCl as well as chloride of Zn and Mg can be directly dissolved in solution.

### 2. Zinc recovery and chlorine circulation & enrichment

Leaching liquor is filtered into clear solution and is mixed with P₂₀₄ organic solvent; zinc is selectively extracted; free acid identical to the extracted zinc ion in mole is generated when extracting zinc; other ions such as C1-, SO₄²⁻, K⁺, Na⁺ and Mg²⁺ are still kept in the solution; residual zinc raffinate is returned and leached, so that such irons as C1-, K⁺, Na⁺ and Mg²⁺ are circulated and accumulated in a process of leaching→zincextracting→re-leaching; reaction of extracting zinc is as follows:

ZnCl₂+3HR→ZnR₂ · HR+2HCl

ZnSO₄+3HR→ZnR₂ · HR+H₂SO₄

When extracting zinc, the organic solvent P₂₀₄ and 260# solvent kerosene are mixed and the volume percentage of the organic solvent P₂₀₄ falls within 20% - 40%, such as 20%, 25%, 30%, 35% or 40%.

The stripping is carried out on zinc extracting organic phase through zinc electrolysis waste liquid; the stripping solution contains 100-120g/L of Zn and 60-100g/L of H₂SO₄, and zinc is electrolyzed after deoiling.

The solution is recycled for use; zinc is extracted through organic solvent for each recycling, while other soluble ions are accumulated in circulating liquid, thus forming a complex chlorine salt-sulfate mixing system mainly containing Cl⁻ ion and simultaneously including SO₄²⁻, Zn²⁺,K⁺, Na⁺, Mg²⁺. Extraction system of zinc is different from the current salt-sulfate zinc extraction system, belonging to two different solution systems.

### 3. Control of chlorine ion

Through circulation in leaching→extracting→re-leaching, content of Cl⁻ in the raw material is continuously increased in the circulating solution; partial chlorine-containing solution in the circulating liquid is taken out after reaching a certain concentration (such as 50-80g/L) in accordance with Cl⁻ input/output balance.

Specific treatment process adopts partial residual liquid after extracting zinc; the residual liquid is an acid solution which contains acid which is identical to extracted zinc ion in mole; meanwhile, the residual liquid contains different amounts of SO₄²⁻and Zn²⁺, K⁺, Na⁺, Mg²⁺, etc. The taking out solution is mixed with chlorine-containing zinc oxide raw material on a relatively low liquid-solid ratio; in this process, acid in the solution is neutralized; and partial Zn²⁺ is turned into alkaline zinc sulfate precipitate.

Neutralization acid reaction:

ZnO+2HCl→ZnCl₂+H₂O

ZnO+H₂SO₄→ZnSO₄+H₂O

Excessive ZnO will continue to react to generate alkaline zinc salt precipitate:

ZnSO₄+ZnO+H₂O→2Zn•SO₄•(OH)₂↓

Meanwhile, chloride in the raw material is dissolved in solution, so that chlorine ion in the solution is increased and chlorine in the raw material is reduced; after chlorine content is reduced, secondary zinc material is leached together with other chlorine-containing zinc oxide.

Treatment process of taking out raffinate can be implemented in the mechanical stirring tank or in a form of dump leaching; ore pulp shall be filtered to realize liquid-solid separation when the treatment process is carried in the mechanical stirring tank.

### 4. Recover KCl and NaCl from chlorine-containing solution

Generally, treated solution contains 80-120g/L of chlorine and 160-240g/L of total salt, being high-concentration solution; the treated solution can serve as raw material for recovering KCl and NaCl or a condition for judging recovery.

The solution is purified into a KCl and NaCl mixing solution; the KCl and NaCl mixing solution is evaporated and concentrated to respectively crystallize out KCl and NaCl products.

A kind of preferable impurity removal process includes the follows: 1) neutralizing and removing heavy metal: adding lime and controlling pH value at 7.0-7.5 to form such heavy metal as Zn²⁺ in the solution into hydroxide precipitate; 2) neutralizing and removing Mg: adding lime and controlling pH value at 10 to form Mg into hydroxide precipitate; 3) removing calcium: precipitating little Ca²⁺ in the solution in the form of CaCO₃ through Na₂CO₃. pH value of the solution is 10-11 after separating precipitate, and the solution is concentrated and crystallized to generate KCl and NaCl.

The present invention is further described through an embodiment below:

### Embodiment:

Some chlorine-containing zinc oxide secondary material is taken as a reagent, wherein chemical components (in percentage by weight) are as follows:

**[Table 1]**

| | Zn | Pb | CaO | SiO₂ | Cl | MgO | K | Na |
|---|---|---|---|---|---|---|---|---|
| Chlorine-containing zinc oxide secondary material I % | 55 | 5 | 3 | 2 | 6.8 | 1.2 | 1.2 | 1.6 |
| Chlorine-containing zinc oxide secondary material II % | 28.7 | 15.50 | - | - | 20.2 | | 9.55 | 7.39 |

After being balanced in repeated circulation, the residual zinc raffinate contains the following components (Unit: g/L)

**[Table 2]**

| Cl- | K⁺ | Na⁺ | Mg²⁺ | Zn²⁺ | H⁺(mol/L) | SO₄²⁻ |
|---|---|---|---|---|---|---|
| 67.2 | 10 | 15.6 | 10.1 | 13 | 0.40 | 32 |

Step (1): leaching I 500g of zinc-containing zinc oxide through the residual zinc raffinate, controlling zinc content of leaching post-liquid at 26g/L, controlling liquid-solid ratio at 42, adding 21L of residual zinc raffinate, slowly adding H₂SO₄ and controlling leaching end pH value at 5.0 to obtain leaching liquid which contains the following components: (unit: g/L)

**[Table 3]**

| Zn²⁺ | Cl⁻ | K⁺ | Na⁺ | Mg²⁺ | SO₄²⁻ |
|---|---|---|---|---|---|
| 26 | 68.8 | 10.2 | 15.8 | 10.3 | 32.5 |

Step (2): filtering clean leaching liquid, extracting zinc through 30% of P₂₀₄₋260# solvent oil, controlling phase ratio at 1: 1 and extracting level on IV-level to obtain residual raffinate which contains 13g/L of Zn and 0.4mol/L of H⁺.
Step (3): stripping zinc from zinc extracting organic phase through zinc electrolysis waste liquid, wherein the stripping post-liquid contains 110g/L of Zn and 85g/L of H₂SO₄, and electrolyzing zinc after deoiling.
Step (4): in accordance with the Step (1) adding 34g of chlorine, taking out 500ml (about 34g of chlorine) of residual zinc raffinate in the Step (2) for taking out, supplementing volume to 21L for reset 20.5L; returning to Step (1) and leaching; and repeating the steps.
Step (5): mixing the 500ml of open residual raffinate and 200g of chlorine-containing zinc oxide secondary material II at liquid-solid ratio of 2.5: 1 for 30min while stirring, and filtering to obtain 500ml of solution which contains the following components: (unit: g/L)

**[Table 4]**

| Zn²⁺ | Cl⁻ | K⁺ | Na⁺ | Mg²⁺ | SO₄²⁻ | PH |
|---|---|---|---|---|---|---|
| 8 | 132.8 | 40.7 | 39.2 | 10.5 | 5.3 | 6.0 |

Concentration of Cl⁻, K⁺ and Na⁺ in the solution are increased while Zn²⁺ and SO₄²⁻are reduced, and total salt content of the solution is 235.7g/L; precipitate is 190g weight after filtering and separating, which contains 31.5% of Zn, and Cl is reduced to 4.6% from 20.02%; and it shall implement leaching in the Step (1).
Step (6): purifying chlorine-containing aqueous phase which contains 132g/L of chlorine ion after the Step (5) to obtain a KCl and NaCl mixing solution; the impurity removal process includes the follows: 1) neutralizing and removing heavy metal: adding lime and controlling pH value at 7.0-7.5 to form such heavy metal as Zn²⁺ in the solution into hydroxide precipitate; 2) neutralizing and removing Mg: adding lime and controlling pH value at 10 to form Mg into hydroxide precipitate; 3) removing calcium: precipitating little Ca²⁺ in the solution in the form of CaCO₃ through Na₂CO₃.
Step (7): evaporating and concentrating the KCl and NaCl mixing solution obtained from the Step (6) to crystallize out KCl and NaCl products, wherein pH value of the mixing solution is 10-11.

The foregoing embodiments merely are exemplary embodiments of the invention, and not intended to define the scope of the invention; any modification, equal replacement, improvement, etc. shall be included in the protection scope of the invention.

## Claims

1. A treatment method of a chlorine-containing zinc oxide secondary material, wherein, the method comprises the following steps:
(1) Leaching the chlorine-containing zinc oxide secondary material I through an acid solution to obtain leaching liquor and leaching residue;
(2) Selectively extracting zinc from leaching liquor obtained from the Step (1) through P₂₀₄₋ kerosene solvent to obtain a zinc-containing organic phase as well as chlorine and acid containing raffinate;
(3) Implementing stripping-electrolysis zinc recovery to the zinc-containing organic phase obtained from the Step (2), and returning the organic phase after the stripping to the Step (2) to extract zinc;
(4) Taking the raffinate obtained from the Step (2) as the acid solution of the Step (1), returning to Step (1) and repeating (1)-(4);
(5) Taking out the raffinate obtained from the Step (4), when the chlorine ion of chlorine-containing aqueous phase in the step (2) achieves 50-80g/L after circulating repeating steps (1)-(4), wherein the number of taking out the raffinate shall guarantee the chlorine content of the taken out raffinate is identical to that of raw material added in the Step (1) so as to keep chlorine ion adding and taking out balance; mixing the taken out raffinate with additional chlorine-containing zinc oxide secondary material II at liquid-solid ratio of 1-3: 1; carrying out liquid-solid separation; leaching the separated deposit through acid raffinate of the Step (1);
(6) Removing impurities of chlorine-containing aqueous phase to obtain the solution containing KCl and NaClwhen the Step (5)is completedand the separated solution contains 80-120g/L of chlorine ion and 160-240g/L of total salt content;
(7) Evaporating and concentrating the KCl and NaCl mixing solution obtained from the Step (6) to crystallize out KCl and NaCl products.

2. The treatment method of the chlorine-containing zinc oxide secondary material according to claim 1, wherein in the Step (1), the leaching conditions are as follows: liquid-solid ratio is controlled according to leaching liquor that contains 25-28g/L of zinc. Depending on different zinc contents of material, the liquid-solid ratio is controlled at 20-40: 1; leaching is implemented in a mechanical stirring tank; and leaching end pH value is at 4.5-5.0.

3. The treatment method of the chlorine-containing zinc oxide secondary material according to claim 1, wherein, sulfuric acid serves as acid solution for primary leaching in the Step (1); the sulfuric acid shall be supplied if the acid from the raffinate of the Step (4) for leaching in the Step (1) is insufficient.

4. The treatment method of the chlorine-containing zinc oxide secondary material according to claim 1, wherein, in the Step (2), the P₂₀₄₋kerosene solvent is prepared by mixing the organic solvent P₂₀₄ and 260# solvent kerosene and the volume percentage of the organic solvent P₂₀₄ falls within 20% - 40%.

5. The treatment method of the chlorine-containing zinc oxide secondary material according to claim 1, wherein, the stripping-electrolysis zinc recovery in the Step (3) is carried out by implementing stripping on zinc-containing organic phase through zinc electrolysis waste solution, wherein the stripping solution contains 100-120g/L of Zn and 60-100g/L of H₂SO₄, and electrolyzing zinc after deoiling.

6. The treatment method of the chlorine-containing zinc oxide secondary material according to claim 1, wherein, mixing in the Step (5) is carried out in a mechanical stirring tank or in a form of dump leaching; ore pulp shall be filtered to realize liquid-solid separation when the mixing is carried in the mechanical stirring tank.

7. The treatment method of the chlorine-containing zinc oxide secondary material according to claim 1, wherein, impurity removal in the Step (6) comprises the following steps:
1)Neutralizing and removing heavy metal: adding lime and controlling pH value at 7.0-7.5;
2) Neutralizing and removing Mg: adding lime and controlling pH value at 10;
3) Removing calcium: adding Na₂CO₃.

## Patentansprüche

1. Ein Verfahren zur Behandlung eines chlorhaltigen Zinkoxidsekundärwerkstoffs, wobei das Verfahren die folgenden Schritte umfasst:
(1) Auslaugen des chlorhaltigen Zinkoxidsekundärwerkstoffs I mittels einer Säurelösung, um eine Laugenflüssigkeit und einen Laugenrückstand zu erhalten;
(2) Selektives Extrahieren von Zink aus der Laugenflüssigkeit aus Schritt (1) mittels Lösungsmittel P₂₀₄-Kerosin, um eine zinkhaltige organische Phase sowie Chlor- und ein säurehaltiges Raffinat zu erhalten;
(3) Anwenden einer Stripping-Elektrolyse auf die zinkhaltige organische Phase gemäß Schritt (2) zur Rückgewinnung von Zink und Rückführung der organischen Phase nach dem Strippen in Schritt (2), um Zink zu extrahieren;
(4) Abnehmen des im Schritt (2) gewonnenen Raffinats, als die Säurelösung aus Schritt (1), Rückkehr zu Schritt (1) und Wiederholung (1) - (4);
(5) Abnehmen des im Schritt (4) gewonnenen Raffinats, wenn die Chloridionen der chlorhaltigen wässrigen Phase im Schritt (2) 50-80 g/L nach mehrfacher Wiederholung von Schritten (1)-(4) erreichen, wobei die Anzahl von Abnahmen des Raffinats gewährleisten sollte, dass der Chlorgehalt des abgenommenen Raffinats identisch zu Rohmaterial in Schritt (1) ist, um Zugabe und Abnahme von Chlorionen gleich zu halten; Mischen des abgenommenen Raffinats mit zusätzlichem chlorhaltigen Zinkoxidsekundärwerkstoff II in einem Flüssig-Fest-Verhältnis von 1-3:1; Durchführen einer Flüssig-Fest-Trennung; Auslaugen der abgetrennten Ablagerung durch den Säureraffinat aus Schritt (1);
(6) Entfernen von Verunreinigungen aus der chlorhaltigen wässrigen Phase, um die KCl- und NaCl-haltige Lösung zu enthalten, wenn Schritt (5) abgeschlossen ist und die abgetrennte Lösung 80-120 g/L Chlorionen und 160-240 g/L vom gesamten Salzgehalt enthält;
(7) Ausdampfen und Konzentrieren der gemischten KCl und NaCl Lösung, die im Schritt (6) erhalten wurde, um KCl- und NaCl-Produkte auszukristallisieren.

2. Das Verfahren zur Behandlung eines chlorhaltigen Zinkoxidsekundärwerkstoffs gemäß Anspruch 1, wobei die Auslaugungsbedingungen im Schritt (1) die Folgenden sind: Flüssig-Fest-Verhältnis ist kontrolliert gemessen an Laugenflüssigkeit, die 25-28 g/L Zink enthält. Abhängig von verschiedenen Zinkgehalten des Materials, wird das Flüssig-Fest-Verhältnis kontrolliert bei 20-40:1; Auslaugen wird durchgeführt in einem mechanischen Rührbehälter; und das Ziel-pH-Wert bei Auslaugung ist 4.5-5.0.

3. Das Verfahren zur Behandlung eines chlorhaltigen Zinkoxidsekundärwerkstoffs gemäß Anspruch 1, wobei Schwefelsäure als Säurelösung für primäres Auslaugen im Schritt (1) dient; Schwefelsäure muss hinzugefügt werden, wenn die Säure aus dem Raffinat aus Schritt (4) zum Auslaugen im Schritt (1) nicht ausreicht.

4. Das Verfahren zur Behandlung eines chlorhaltigen Zinkoxidsekundärwerkstoffs gemäß Anspruch 1, wobei im Schritt (2) das P₂₀₄-Kerosinlösungsmittel durch Mischen des organischen Lösungsmittels P₂₀₄ und 260# Kerosin-Lösungsmittel zubereitet ist und der Volumenprozentsatz des organischen Lösungsmittels P₂₀₄ innerhalb von 20%-40% fällt.

5. Das Verfahren zur Behandlung eines chlorhaltigen Zinkoxidsekundärwerkstoffs gemäß Anspruch 1, wobei die Zinkrückgewinnung durch Stripping-Elektrolyse in Schritt (3) mittels Anwendung von Stripping auf zinkhaltigen organischen Phase durch die Abfalllösung aus Zink-Elektrolyse durchgeführt ist, wobei die Stripplösung 100-120 g/L Zink und 60-100 g/L H₂SO₄ enthält, und Elektrolyse von Zink nach dem Entölen.

6. Das Verfahren zur Behandlung eines chlorhaltigen Zinkoxidsekundärwerkstoffs gemäß Anspruch 1, wobei Mischen im Schritt (5) in einem mechanischen Rührbehälter oder in einer Auslaugform durchgeführt wird; Erzpulpe muss gefiltert werden, um flüssig-fest-Trennung durchzuführen, wenn das Mischen in einem mechanischen Rührbehälter durchgeführt wird.

7. Das Verfahren zur Behandlung eines chlorhaltigen Zinkoxidsekundärwerkstoffs gemäß Anspruch 1, wobei Entfernen von Verunreinigungen im Schritt (6) folgende Schritte umfasst:
1. Neutralisieren und Entfernen von Schwermetallen: Hinzufügen von Kalk und Kontrollieren des pH-Werts bei 7.0-7.5;
2. Neutralisieren und Entfernen von Mg: Hinzufügen von Kalk und Kontrollieren des pH-Werts bei 10;
3. Entfernen von Kalzium: Hinzufügen von Na₂CO₃.

## Revendications

1. Procédé de traitement d'un matériau secondaire d'oxyde de zinc contenant du chlore, dans lequel le procédé comprend les étapes suivantes consistant à :
(1) lixivier le matériau secondaire d'oxyde de zinc contenant du chlore I par l'intermédiaire d'une solution acide pour obtenir une liqueur de lixiviation et un résidu de lixiviation ;
(2) extraire sélectivement le zinc de la liqueur de lixiviation obtenue à l'étape (1) par l'intermédiaire d'un solvant de P₂₀₄-kérosène pour obtenir une phase organique contenant du zinc ainsi que du chlore et un raffinat contenant l'acide ;
(3) mettre en oeuvre la récupération du zinc par décapage-électrolyse de la phase organique contenant du zinc obtenue à l'étape (2), et renvoyer la phase organique après le décapage vers l'étape (2) pour extraire le zinc ;
(4) prélever le raffinat obtenu à l'étape (2) en tant que solution acide de l'étape (1), renvoyer vers l'étape (1) et répéter les étapes (1) à (4) ;
(5) prélever le raffinat obtenu à l'étape (4), lorsque l'ion chlore de la phase aqueuse contenant du chlore de l'étape (2) atteint 50 à 80 g/l après la répétition par circulation des étapes (1) à (4), le nombre de prélèvements du raffinat devant garantir que la teneur en chlore du raffinat prélevé est identique à celle du matériau brut ajouté à l'étape (1) de sorte à maintenir l'équilibre de l'addition et du prélèvement de l'ion chlore ; mélanger le raffinat prélevé avec un autre matériau secondaire d'oxyde de zinc contenant du chlore II selon un rapport liquide-solide de 1 à 3:1 ; effectuer une séparation liquide-solide ; lixivier le dépôt séparé par l'intermédiaire du raffinat acide de l'étape (1) ;
(6) retirer les impuretés de la phase aqueuse contenant du chlore pour obtenir la solution contenant du KCl et du NaCl lorsque l'étape (5) est terminée et la solution séparée contient de 80 à 120 g/l d'ion chlore et de 160 à 240 g/l de teneur en sel totale ;
(7) évaporer et concentrer la solution de mélange de KCl et de NaCl obtenue à l'étape (6) pour cristalliser les produits KCl et NaCl.

2. Procédé de traitement d'un matériau secondaire d'oxyde de zinc contenant du chlore selon la revendication 1, dans lequel, dans l'étape (1), les conditions de lixiviation sont les suivantes : le rapport liquide-solide est régulé selon la liqueur de lixiviation qui contient de 25 à 28 g/l de zinc, en fonction des différentes teneurs en zinc du matériau, le rapport liquide-solide est régulé à 20 à 40:1 ; la lixiviation est mise en oeuvre dans une cuve de mélange mécanique ; et la valeur à la fin de la lixiviation est de 4,5 à 5,0.

3. Procédé de traitement d'un matériau secondaire d'oxyde de zinc contenant du chlore selon la revendication 1, dans lequel l'acide sulfurique fait office de solution acide pour la lixiviation principale de l'étape (1) ; l'acide sulfurique doit être ajouté si l'acide provenant du raffinat de l'étape (4) pour la lixiviation de l'étape (1) est insuffisant.

4. Procédé de traitement d'un matériau secondaire d'oxyde de zinc contenant du chlore selon la revendication 1, dans lequel, dans l'étape (2), le solvant de P₂₀₄-kérosène est préparé par mélange du solvant organique P₂₀₄ et du solvant 260# kérosène et le pourcentage volumique du solvant organique P₂₀₄ est compris dans la plage allant de 20 % à 40 %.

5. Procédé de traitement d'un matériau secondaire d'oxyde de zinc contenant du chlore selon la revendication 1, dans lequel la récupération du zinc par décapage-électrolyse de l'étape (3) est effectuée par la mise en oeuvre d'un décapage sur la phase organique contenant du zinc par l'intermédiaire d'une solution résiduelle de l'électrolyse du zinc, la solution de décapage contenant de 100 à 120 g/l de Zn et de 60 à 100 g/l de H₂SO₄, et d'une électrolyse du zinc après déshuilage.

6. Procédé de traitement d'un matériau secondaire d'oxyde de zinc contenant du chlore selon la revendication 1, dans lequel le mélange de l'étape (5) est effectué dans une cuve de mélange mécanique ou sous la forme d'une lixiviation en tas ; la pulpe de minerai doit être filtrée pour réaliser une séparation liquide-solide lorsque le mélange est réalisé dans la cuve de mélange mécanique.

7. Procédé de traitement d'un matériau secondaire d'oxyde de zinc contenant du chlore selon la revendication 1, dans lequel l'élimination des impuretés de l'étape (6) comprend les étapes suivantes consistant à :
1) neutraliser et éliminer le métal lourd ; ajouter de la chaux et réguler la valeur de pH à 7,0 à 7,5 ;
2) neutraliser et éliminer le Mg ; ajouter de la chaux et réguler la valeur de pHà10;
3) éliminer le calcium ; ajouter du Na₂CO₃.
